(19) Europäisches Patentamt / European Patent Office / Office européen des brevets

(11) **EP 4 733 829 A1**

(12) **EUROPEAN PATENT APPLICATION**
published in accordance with Art. 153(4) EPC

(43) Date of publication:
**29.04.2026   Bulletin 2026/18**

(21) Application number: **24796716.9**

(22) Date of filing: **03.04.2024**

(51) International Patent Classification (IPC):
**G02B 27/28** (2006.01)        **G02F 1/09** (2006.01)

(52) Cooperative Patent Classification (CPC):
**G02B 27/28; G02F 1/09**

(86) International application number:
**PCT/JP2024/013700**

(87) International publication number:
**WO 2024/224958 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **26.04.2023   JP 2023072646**

(71) Applicant: **SHIN-ETSU CHEMICAL CO., LTD.
Tokyo 1000005 (JP)**

(72) Inventors:
• **YAHAGI Akira
  Annaka-shi, Gunma 379-0195 (JP)**
• **KATAOKA Yuki
  Annaka-shi, Gunma 379-0195 (JP)**
• **MAKIKAWA Shinji
  Annaka-shi, Gunma 379-0195 (JP)**

(74) Representative: **Schicker, Silvia
Wuesthoff & Wuesthoff
Patentanwälte und Rechtsanwalt PartG mbB
Schweigerstraße 2
81541 München (DE)**

(54) **OPTICAL ISOLATOR FOR WAVELENGTH BAND OF 780-820 NM**

(57)     The present invention is an optical isolator for use in a wavelength band of 780 to 820 nm including a Faraday rotator made of a composite oxide containing an oxide represented by the following formula (A) as a main component and having a Verdet constant at a wavelength of 800 nm of 0.80 min/(Oe·cm) or more, and a hollow magnet arranged around an outer periphery of the Faraday rotator,
in which a sample length L (cm) of the Faraday rotator is in a range represented by the following inequality (1), and a magnetic flux density B (Oe) applied to the Faraday rotator is in a range represented by the following inequality (2)

$$(Tb_xR_{1-x})_2O_3 \qquad (A)$$

in which "x" satisfies $0.8 \leq x \leq 1.0$, and R includes at least one element selected from the group consisting of scandium, yttrium, and lanthanoid elements other than Tb (terbium)

$$0.8 \leq L \leq 1.1 \quad (1)$$

$$B \leq 0.4 \times 10^4 \quad (2).$$

This provides a compact optical isolator for use in a wavelength band of 780 to 820 nm.

EP 4 733 829 A1

[FIG. 1]

**Description**

TECHNICAL FIELD

The present invention relates to an optical isolator for use in a wavelength band of 780 to 820 nm.

BACKGROUND ART

Semiconductor lasers are primarily used in industrial lasers used as optical recording, medical treatment, and optical measurement applications. Conventionally, for optical recording onto CDs, compact semiconductor lasers having a wavelength of 780 nm have been employed. For bio imaging using two-photon fluorescence microscopy or second harmonic generation microscopy to visualize biomolecules, pulsed semiconductor lasers in 800 nm band have been employed. Moreover, in laser length measuring devices having a positioning accuracy ranging from several nanometers to several picometers, semiconductor lasers in an infrared wavelength range of 780 to 800 nm have been employed.

A typical example of such a semiconductor laser is a Fabry-Perot laser (Fabry-Perot Laser Diode). A principle of laser oscillation is that a resonator is formed by opposing two reflective surfaces, which are formed by, for example, cleaving crystals, on both ends of light-transmitting path, and when stimulated emission exceeds light absorption, laser light is emitted. While such resonator configurations are extremely simple and provide advantages of enabling a compact laser package, when the laser light emitted is incident on coupling end faces, such as optical fibers, a portion of the light may be reflected to form a backward light. When this backward light is introduced into the resonator, the light interferes with the laser light that is to be originally output, thereby causing instability in the laser output.

In order to ensure a stable operation of the semiconductor laser, it is therefore essential that the reflected backward light is prevented from returning to a light-emitting device, which is a light-emitting source. To achieve this, an optical isolator having functions of passing a forward light and shielding a backward light is required to be arranged between the light-emitting source and a workpiece, thereby preventing the reflected light from returning from the optical fiber to the light-emitting source.

Incidentally, a Faraday rotation angle of approximately 45° is required to achieve such a function by the optical isolator. Specifically, the light entered into the optical isolator has a plane of polarization rotated by 45° by the Faraday rotator and passes through an input polarizer and an output polarizer, which are respectively adjusted to have a specific angle. On the other hand, the backward light has a plane of polarization rotated by 45° in a counter direction by virtue of non-reciprocating characteristics of the Faraday rotator. This makes the orthogonal polarization plane have an angle of 90° with the input polarizer there between, thereby shielding the backward light. The optical isolator, therefore, makes use of this phenomenon to allow passage of the light in one direction only by shielding the passage of a returning light by reflection.

Moreover, the optical isolator having such a function is configured to have three main parts: the Faraday rotator, a pair of polarizers arranged on a light input side and an output side of the Faraday rotator, and a magnet that applies a magnetic field along a light passing direction (optical axis direction) of the Faraday rotator. In this optical isolator, when the light is incident on the Faraday rotator, a phenomenon is triggered such that the plane of polarization is rotated in the Faraday rotator. This phenomenon is generally referred to as Faraday effect, and the angle by which the plane of polarization is rotated is referred to as a Faraday rotation angle. The magnitude of the rotation angle, denoted by $\theta$, is represented by the following equation.

$$\theta = V \times H \times L$$

Here, V represents a Verdet constant, which is the constant determined by materials and a measurement wavelength of the Faraday rotator, H represents magnetic flux density, and L represents a length of the Faraday rotator (i.e., sample length).

A determinant in determining a size of the optical isolator is a size of a magnet that provides the magnetic flux density H. When a larger magnet is used, the magnetic flux density H increases; conversely, when a smaller magnet is employed to achieve miniaturization, the magnetic flux density H decreases. Consequently, in the Faraday rotator of identical length, it becomes necessary to develop a material having a greater Verdet constant.

Conventionally, materials for the Faraday rotator for use in a wavelength band of 780 to 820 nm, materials, TGG: terbium-gallium-garnet (chemical formula: $Tb_3Ga_5O_{12}$), or the like, are known. The Verdet constant of TGG in a wavelength band of 780 to 820 nm has a small value of 0.25 to 0.29 min/(Oe·cm), and in the case of an actually used TGG single crystal, the Verdet constant thereof is approximately 0.27 min/(Oe·cm) at a wavelength of 800 nm. In the Verdet constant of approximately 0.27 min/(Oe·cm), a further larger magnet having an outer diameter of $\phi$3.5 cm, a length of 2.0 cm, is required to be used to allow the optical isolator to perform functionality. This causes a problem in which a shape of the optical isolator is enlarged. Accordingly, such a material is unsuitable for the material for the Faraday rotator. Note that 1 min represents one-sixtieth of one degree.

Accordingly, Patent Document 1 discloses an oxide containing terbium oxide 50% or more in terms of molar ratio based on the total molar amount of the oxide components, as a material enabling miniaturization of an optical isolator. According to this disclosure, it is considered that, when this oxide is used, miniaturization of the optical isolator used at a wavelength of 800 nm becomes possible, provided that the Verdet constant V at the same wavelength is 0.62 min/(Oe·cm) or more, and a magnetic flux density B (Oe) applied to the Faraday rotator is $0.5 \times 10^4$ or less. Specifically, in a case of an oxide containing terbium oxide at a molar ratio of 60%, the Faraday rotation angle of 45 degrees is obtained using a magnet having an inner diameter of $\phi 0.4$ cm, an outer diameter $\phi 3.5$ cm, and a length of 2.0 cm. This magnet exhibits a magnetic flux density of 3950 [Oe] (i.e., 0.395 [T]) when a sample length is 1.1 cm.

CITATION LIST

PATENT LITERATURE

Patent Document 1: JP 2015-018145 A

SUMMARY OF INVENTION

TECHNICAL PROBLEM

In recent years, however, in fields of optical recording, medical treatment, and measurement applications, where a semiconductor laser is employed, a package size of the semiconductor laser used in an infrared wavelength band of 780 to 820 nm has been increasingly miniaturized. Accordingly, an optical isolator provided outside this package is also required to be further miniaturized for use in the same wavelength band. Patent Document 1 disclosed a Faraday rotator having a Verdet constant of 0.62 min/(Oe·cm) at a wavelength of 800 nm. Accordingly, a magnet size is required to have dimensions of an outer diameter of $\phi 3.5$ cm and a length of 2.0 cm when a sample length of 1.1 cm. With such dimensions, the optical isolator becomes larger than the laser package size, resulting in a layout constraint for both components. Thus, a realistic outer diameter of a mountable optical isolator is $\phi 1.7$ cm or less, which is half or less of $\phi 3.5$ cm, and a length of 2.0 cm or less is more suitable as the external dimension.

Therefore, a conventional terbium oxide material having the Verdet constant of 0.62 min/(Oe·cm) at a wavelength of 800 nm is insufficient to meet this demand.

The present invention has been made in view of the current state. An object of the present invention is to provide a further miniaturized optical isolator by combining a Faraday rotator exhibiting a large Faraday effect in a wavelength band of 780-820 nm with a magnet having a compact profile.

SOLUTION TO PROBLEM

To achieve the object, the present invention is an optical isolator for use in a wavelength band of 780 to 820 nm comprising a Faraday rotator made of a composite oxide containing an oxide represented by the following formula (A) as a main component and having a Verdet constant at a wavelength of 800 nm of 0.80 min/(Oe·cm) or more, and a hollow magnet arranged around an outer periphery of the Faraday rotator, wherein a sample length L (cm) of the Faraday rotator is in a range represented by the following inequality (1), and a magnetic flux density B (Oe) applied to the Faraday rotator is in a range represented by the following inequality (2)

$$(Tb_xR_{1-x})_2O_3 \qquad (A)$$

wherein "x" satisfies $0.8 \leq x \leq 1.0$, and R comprises at least one element selected from the group consisting of scandium, yttrium, and lanthanoid elements other than Tb (terbium)

$$0.8 \leq L \leq 1.1 \quad (1)$$

$$B \leq 0.4 \times 10^4 \quad (2).$$

With such an optical isolator, Faraday effect is enhanced due to a large Verdet constant, which allows a small magnetic field to obtain a predetermined Faraday rotation angle. As a result, a hollow magnet can be miniaturized, enabling further miniaturization of the optical isolator.

Moreover, the oxide is preferably a ceramic.

Such an oxide can readily realize the Faraday rotator having a large Verdet constant.

Moreover, it is preferable that the Faraday rotator has, at the sample length L (cm), an insertion loss of 1 dB or less and an extinction ratio of 30 dB or higher.

With such a Faraday rotator, the optical isolator can achieve high performance with low insertion loss and high isolation.

Moreover, the hollow magnet is preferably made of a neodymium-iron-boron (NdFeB)-based magnet.

Such a hollow magnet, even when compact, can reliably realize the application of a magnetic flux density B to the Faraday rotator.

ADVANTAGEOUS EFFECTS OF INVENTION

As described above, with the inventive optical isolator for use in a wavelength band of 780 to 820 nm, the Faraday effect is enhanced due to a large Verdet constant, which allows a small magnetic field to obtain the predetermined Faraday rotation angle. As a result, the magnet can be miniaturized, enabling further miniaturization of the optical isolator.

Moreover, flexibility of spatial dimensions in a laser apparatus is expanded, in which the optical isolator is incorporated.

Furthermore, the length of the optical isolator can be shortened compared to an optical isolator having a conventional TGG Faraday rotator; this shortening enables a reduction in absorption loss, thereby reducing the insertion loss, which is an important characteristic of the optical isolator.

BRIEF DESCRIPTION OF DRAWINGS

[FIG. 1] is a schematic cross-sectional view illustrating a configuration example of an optical isolator according to the present invention.

[FIG. 2] is a schematic cross-sectional view illustrating a configuration example of an optical isolator in Comparative Example 1.

[FIG. 3] is a chart showing wavelength-dependent transmittance characteristics of a Faraday rotator (without AR coating) used in Example 1 and Comparative Example 1.

[FIG. 4] is a chart showing a relation between a sample length L (0.8 to 1.1 cm) of a Faraday rotator and a magnitude of magnetic flux density T ($10^4$ Oe) required to achieve 45-degree rotation of a Faraday rotation angle.

[FIG. 5] is a simulation chart of magnetic flux density for calculating a magnet shape used in Example 1.

[FIG. 6] is a simulation chart of magnetic flux density for calculating a magnet shape used in Comparative Example 1.

DESCRIPTION OF EMBODIMENTS

As described above, further miniaturization has been desired for an optical isolator for use in a wavelength band of 780 to 820 nm.

To solve the above problem, the present inventors have earnestly studied and found out that, in a wavelength band of 780 to 820 nm, a Verdet constant is required to have 0.80 min/(Oe·cm) or more for achieving a magnet outer diameter of $\phi$1.2 cm or less and a length of 2.0 cm or less. It is also found that when the Verdet constant is below this value, a strength of a predetermined magnetic field becomes $0.4 \times 10^4$ (Oe) or more, and further miniaturization of the optical isolator is difficult.

To this end, the present inventors made further studies and found development of an oxide material containing terbium oxide 80% or more in terms of molar ratio based on the total molar amount of the oxide components, which exhibit the Verdet constant of 0.85 min/(Oe·cm) or more at a wavelength of 800 nm and also found that when this material is employed as the Faraday rotator, a length thereof can be shortened to 1.1 cm or less, enabling mounting the Faraday rotator within the magnet dimensions described above.

Moreover, the present inventors gained new insight that, by combining the oxide materials having a strong Faraday effect described above and a hollow magnet having a high magnetic flux density, further miniaturization can be realized. This finding has led to the completion of the present invention.

Hereinafter, an embodiment of the present invention will be described. However, the present invention is not limited thereto.

An optical isolator according to the present invention is intended to be employed for a laser beam in a wavelength band of 780 to 820 nm. Note that this laser includes a semiconductor laser. In addition, the optical isolator according to the present invention can also be redesigned for a laser beam in a wavelength band other than the above.

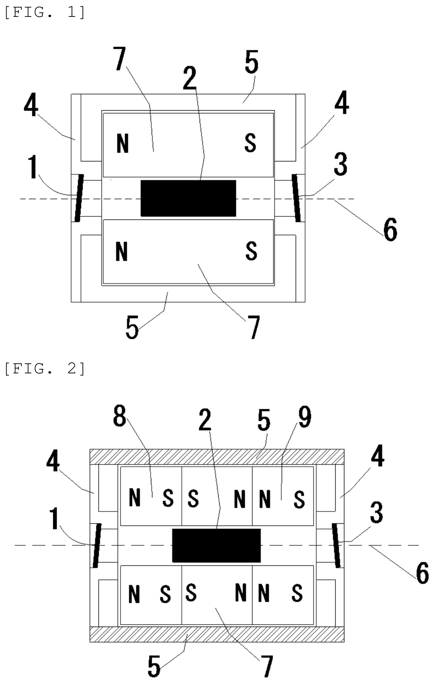

FIG. 1 is a schematic cross-sectional view illustrating a configuration example of the optical isolator. In FIG. 1, an input polarizer 1, a Faraday rotator 2, and an output polarizer 3 are arranged sequentially on an optical axis 6 directing from an input side on the left to an output side on the right. Moreover, on the input side, the input polarizer 1 is fixed to a polarizer holder 4, and similarly, on the output side, the output polarizer 3 is fixed to the polarizer holder 4. Each of the polarization directions for input and output is then adjusted, and the polarizer holders are subsequently fixed to a metal holder 5.

The shape of the Faraday rotator 2 is not limited and may be a triangular prism, or a quadrangular prism, but a cylindrical shape is preferred. Thereafter, a cylindrical Faraday rotator 2 is described as an example.

A hollow magnet 7 is arranged around an outer periphery of this Faraday rotator 2. When the Faraday rotator 2 is cylindrical, the hollow magnet 7 is preferably in a shape of a hollow cylindrical tube, and a central axis of the Faraday rotator 2 and a central axis of the hollow portion of the hollow magnet 7 are preferably coaxial. Moreover, an outer diameter of the Faraday rotator 2 and an inner diameter of the hollow magnet 7 are almost identical; it is preferable that the axes are aligned after assembling the optical isolator. By this manner of arrangement, the Faraday rotator 2 is positioned in the center of the hollow magnet 7.

Next, the inventive optical isolator includes a Faraday rotator having a Verdet constant of 0.80 min/(Oe·cm) or more at the wavelength of 800 nm; thus, this Faraday rotator will be described.

The Faraday rotator is made of the oxide material containing the terbium oxide 80% or more in terms of molar ratio based on the total molar amount of the oxide components, which exhibit the Verdet constant of 0.85 min/(Oe·cm) or more at the wavelength of 800 nm. Specific material is composed of an oxide represented by the following formula (A) as a main component and may further contain a sintering additive.

$$(Tb_xR_{1-x})_2O_3 \ (A)$$

Here, in the formula (A), "x" satisfies $0.8 \leq x \leq 1.0$, and R includes at least one element selected from the group consisting of scandium, yttrium, and lanthanoid elements other than Tb (terbium).

Note that when such an oxide crystal is used for the Faraday rotator of the isolator, it is preferable that, after cutting the Faraday rotator, the surfaces thereof are mirror-finished with a polishing agent, or the like. The polishing agent is not particularly limited, but, for example, colloidal silica can be exemplified.

Although the material of the Faraday rotator is not particularly limited as long as the materials described above are used, a ceramic can be used as the material. This is because the ceramic can readily realize the Faraday rotator having a large Verdet constant. Hereinafter, such a ceramic is referred to as "transparent ceramic."

[Method for Producing Transparent Ceramic]

The transparent ceramic is produced using oxide powders having a desired compounding ratio.

The method for producing a transparent ceramic is not particularly limited, and any conventionally known method may be appropriately selected and employed. As for the method for producing a transparent ceramic, a hot isostatic pressing process, a combination of a solid-phase method and a press-molding method, a method of vacuum sintering using, e.g., mold forming, are exemplified. These methods are described in Akio Ikesue, "Single Crystal to Polycrystalline Materials with Optical Grade", Applied Physics, Vol. 75, No. 5, 579-583 (2006); Takamasa Yanagitani and Hideki Yagi, "Current State and Future of Ceramic Laser Material", The Review of Laser Engineering, Vol. 36, No. 9, 544-548 (2008); etc.

Hereinafter, an example of a case of the transparent ceramic production is described, in which a HIP (Hot Isostatic Pressing) method is employed as a method for producing a transparent ceramic.

(Preparing Raw Material Powder)

A powder material of the oxide represented by the above formula (A), which is used as a starting material, preferably has high purity, more preferably the purity of 99.9 mass% or more, further preferably 99.99 mass% or more, and still further preferably 99.999 mass% or more. Note that the terbium oxide is not limited to $Tb_2O_3$, but $Tb_4O_7$ can also be used.

The transparent ceramic is produced using the oxide powder of the desired compounding ratio; shapes or sizes of powder particles used in production are not particularly limited. Moreover, a method for preparing these raw material powders is also not particularly limited. The raw material powder, which is prepared by any of a dry milling method, a wet milling method, a coprecipitation method, an alkoxide hydrolysis method, a sol-gel method, a hydrothermal synthesis method, a spray pyrolysis method, or any other synthesis method, can be suitably used. Note that, in this case, the oxide powder material needs only to be contained as a main component, and other components may be intentionally contained as accessory components.

Herein, the term "contain as the main component" means to contain 50 mass% or more of a composite oxide represented by the formula (A). The content of the composite oxide represented by the formula (A) is preferably 80 mass% or more, more preferably 90 mass% or more, further preferably 97 mass% or more, and particularly preferably 98 mass% or more.

Typical examples of other accessory components (components other than the main component) include dopants and fluxes doped in single-crystal growth, and sintering additives incorporated in ceramic production.

Here, examples of sintering additives include the oxides of group 4 elements, such as titanium, zirconium, and hafnium, and the oxides of group 2 elements, such as magnesium and calcium. In addition, the oxides of group 4 elements and the oxides of group 2 elements may also be used in combination. Since these oxides do not absorb light around the wavelength of 800 nm, thus suitable for use in the transparent ceramic according to the present invention. The sintering additive may be added in a predetermined amount. Preferably, the sintering additive is contained in more than 0.01 parts by mass and not more than 5.0 parts by mass with respect to the composite oxide of 100 parts by mass; more preferably, more than 0.03 parts by mass and not more than 3.0 parts by mass with respect to the composite oxide of 100 parts by mass; further preferably more than 0.05 parts by mass and not more than 2.0 parts by mass with respect to the composite oxide of 100 parts by mass.

On the other hand, elements other than those described above exhibit following problems; absorption is observed in the vicinity of the wavelength of 800 nm; solid solubility is low in rare earth oxides, preventing reaction as the sintering additives and causing separate precipitation; excessive reactivity prevents attainment of crystal grain size in an optimal range; these elements gradually react with moisture over time, causing the ceramics to exhibit hygroscopicity and resulting in loss of transparency. Consequently, these elements are unsuitable as the sintering additives for producing the transparent ceramic according to the present invention.

Next, the obtained raw material powder is weighed in a desired molar ratio. Subsequently, at least one of the following is carried out: a dispersant such as ammonium polyacrylate or ammonium polycarboxylate is added as needed to make particle size uniform; or a binder such as methyl cellulose, polyvinyl alcohol, or polyethylene glycol is added to obtain a desired molded body. Moreover, the powder material is then slurried using a solvent including water, methyl alcohol, ethyl alcohol, or the like, and subjected to conventional mixing and pulverization, such as by ball milling, for several to more than ten hours. The resulting slurry is treated by spray-drying to obtain a dry spherical body.

Alternatively, after mixing and pulverization, such as by ball milling, calcination treatment may be performed, and after the calcination treatment, further pulverization treatment may be performed. Specifically, a method is exemplified in which, after mixing and pulverization, such as by ball milling, the mixed powder is subjected to spray-drying followed by calcination.

A calcination temperature and a calcination time are not particularly limited, but the calcination temperature is preferably 600 to 1,600°C, more preferably 800 to 1,400°C, and further preferably 800 to 1,100°C. A calcination atmosphere is not particularly limited and can be suitably utilized from atmospheric, oxygen and oxygen-containing atmospheres, inert atmospheres such as an argon atmosphere or a nitrogen gas atmosphere. In addition, the calcination time is not particularly limited and may be appropriately selected depending on the moisture content of the mixed powder and the calcination temperature, but is preferably 1 to 20 hours, more preferably 5 to 15 hours. Moreover, when performing calcination, it is preferable to perform further mixing and pulverization, such as by ball milling, for several to more than ten hours after calcination.

Alternatively, for the purpose of sharpening distribution of the average particle size of the mixed powder and further enhancing purity thereof, the powder material may be dissolved, recrystallized, and pulverized, and then used as the raw material powder. Specifically, a method below can be exemplified, in which a high-purity (e.g., 99.9 mass% or more) raw material powder is provided: $Tb_2O_3$ and $R_2O_3$ are weighed to attain a desired molar ratio of $Tb_2O_3$ to $R_2O_3$; these raw material powders are dissolved in a nitric acid aqueous solution having a concentration of 1 mol/l, to which an aqueous ammonium sulfate solution having a concentration of 1 mol/l is mixed; ultrapure water is then added to adjust the concentration of the mixture solution; while mixing the aqueous solution obtained, an aqueous ammonium hydrogen carbonate solution having a concentration of 0.5 mol/l is added in drops at a constant drop rate until the pH reaches 8; the solution is left at room temperature for several days while stirring; subsequently, the resulting solution is filtered and cleaned using ultrapure water, followed by drying at 150°C for several days.

The mixed powder obtained is placed in an alumina crucible and pre-calcined in an inert atmosphere such as a nitrogen atmosphere or an argon atmosphere, preferably at 800 to 1,500°C, more preferably at 1,000 to 1,400°C, further preferably at 1,100 to 1,200°C, preferably for 0.5 to 10 hours, more preferably for 1 to 7 hours, and further preferably 2 to 4 hours. Here, the inert atmosphere is employed such that a valence of the terbium oxide is unchanged.

[Producing Step]

The raw material powder described above is employed to form a predetermined shape, followed by debinding, then sintering, and further processing by hot isostatic pressing (HIP) to produce a transparent complex oxide sintered body.

(Molding)

For molding, a conventional press molding step can be used suitably. That is, a typical pressing step of filling the raw material powder into a mold and pressing thereto from one direction, or a CIP (Cold Isostatic Press) step of storing the powder in a deformable waterproof container in a sealed manner and applying a hydrostatic pressure may be used. Note that the applied pressure is not particularly limited and may be adjusted as appropriate while monitoring a relative density of the molded body to be obtained. In the molding step, another molding step, such as cast molding, may also be suitably used. In addition, the shape to be molded is not particularly limited, and may be selected as appropriate according to, e.g., an apparatus to be used. For example, it is exemplified by molding into a cylindrical shape.

(Debinding)

In the debinding, a conventional debinding step can be suitably used. That is, the molded body can be subjected to the debinding step via temperature elevation in a heating furnace. Moreover, the temperature at this time is preferably 200 to 600°C, more preferably 250 to 400°C. An atmosphere during the debinding is not particularly limited, and an air, oxygen, or argon gas atmospheres, or the like, can be suitably used.

(Sintering)

In the sintering, a typical sintering step can be suitably used. That is, heating and sintering steps, such as a resistance heating method and an induction heating method, can be suitably used. An atmosphere at this time is not particularly limited, and various atmospheres, including air, inert gas, oxygen gas, hydrogen gas, and helium gas, can be used suitably. More preferably, the sintering may be carried out under reduced pressure (in a vacuum).

Moreover, a degree of vacuum during sintering is preferably $1 \times 10^{-1}$ Pa or less, more preferably $1 \times 10^{-2}$ Pa or less. The sintering condition is preferably from 1,300 to 1,800°C, more preferably from 1,400 to 1,700°C, and even more preferably from 1,400 to 1,600°C. A sintering time is preferably from 1 to 50 hours, more preferably from 2 to 25 hours, and even more preferably from 5 to 20 hours. At this time, a rate of temperature rise is preferably 100 to 500°C/hr, more preferably 200 to 400°C/hr, even more preferably 250 to 350°C/hr, up to approximately 1,200°C. When the temperature is higher than these, it is preferable to reduce the rate of temperature rise, and more preferably to a rate of 20 to 100°C/hr.

(Processing using Hot Isostatic Pressing (HIP))

Moreover, after sintering described above, subsequent steps such as hot isostatic pressing (HIP) treatment are provided to further improve the transparency of the sintered body. In particular, when the transparent complex oxide sintered body does not develop light transmittance even after the sintering step, proceeding to the HIP treatment is preferred because bubbles in the sintered body are eliminated and the light transmittance is readily achievable.

A processing temperature is preferably higher than the sintering temperature, and preferably 1,300°C or more. Moreover, the processing temperature during the HIP treatment is preferably 1,800°C or less, and more preferably 1,700°C or less, because grain growth during the HIP treatment makes the elimination of the bubbles difficult. A processing pressure is preferably 196 MPa or less, which allows for simple and convenient treatment using a commercially available HIP apparatus. A processing time is not particularly limited, but is preferably 50 hours or less, more preferably 25 hours or less, and even more preferably 10 hours or less. In addition, the processing time is preferably 15 minutes or more, more preferably 30 minutes or more, and even more preferably 1 hour or more. Types of pressurizing gas media that are suitably usable in this process include an inert gas such as argon or a mixed gas of Ar and $O_2$.

(Processing)

In order to utilize an obtained transparent body for an optical application, both end surfaces present on an axis, which is optically used, are optically polished and finished such that the transparent body has a length of L (cm). When $\lambda$ is 633nm, a flatness of the polished surface is preferably $\lambda/2$ or less, particularly preferably $\lambda/8$ or less. Note that, by forming an antireflective film as appropriate on the optically polished surface, it is possible to further reduce an optical loss.

Moreover, in the present invention, the Verdet constant is not particularly limited as long as the constant is 0.80 min/(Oe·cm) or more, but the Verdet constant where a contained amount of terbium oxide reaches 100% represents the upper limit. When the Verdet constant is less than 0.80 min/(Oe·cm), the size of the magnet required to achieve 45-degree rotation of a Faraday rotation angle increases, making miniaturization of the optical isolator difficult.

This Verdet constant may be measured according to a conventional method, and the measurement method is not particularly limited. Specifically, an oxide having a predetermined thickness is cut out and subjected to mirror polishing and finishing. This polished oxide is then set as the Faraday rotator in the permanent magnet having a known magnetic flux density, and the Verdet constant at the wavelength of 800 nm is measured in the air at a measurement condition of 25 ±10°C.

Table 1 shows a specific compositional example of $(Tb_xR_{1-x})_2O_3$ and a value of the Verdet constant at a wavelength of 800 nm.

[Table 1]

| Material Composition X | $(Tb_xSc_{1-x})_2O_3$ | $(Tb_xY_{1-x})_2O_3$ | $(Tb_xLu_{1-x})_2O_3$ |
|---|---|---|---|
| X=0.8 | 0.85 | 0.85 | 0.86 |
| X=1.0 | 1.04 | 1.05 | 1.05 |

Table 1 shows that in three compositional examples, when x = 0.8 or 1.0, the Verdet constants are from 0.85 to 1.05 min/(Oe·cm), in which all Verdet constants satisfy 0.80 min/(Oe·cm) or more. Note that the upper limit of the Verdet constant is not particularly limited, but, for example, can be 1.20 min/(Oe·cm) or less.

Furthermore, in the present invention, a length of the Faraday rotator (sample length) L (cm) and the magnetic flux density B (Oe) of the mounted magnet satisfy the formulas (1) and (2) below.

$$0.8 \leq L \leq 1.1 \quad (1)$$

$$B \leq 0.4 \times 10^4 \quad (2)$$

When the length of the Faraday rotator is less than 0.8 cm, the magnetic flux density for obtaining a 45-degree rotation of the Faraday rotation angle exceeds $0.4 \times 10^4$ Oe, causing outer dimensions of the magnet to be further increased, resulting in difficulty in miniaturization. Moreover, when the sample length of the Faraday rotator exceeds 1.1 cm, the magnetic flux density applied becomes extremely small. Conversely, as the magnet length increases and the accompanying isolator length is also increased, further miniaturization of the isolator also becomes difficult.

The Faraday rotator of the present invention preferably has an insertion loss of 1 dB or less and an extinction ratio of 30 dB or higher when the sample length L (cm) satisfies the formula above. Moreover, when the sample length L is within a range that satisfies the above formula, it is preferable because the optical isolator having optical characteristics of low loss and high isolation can be produced. Note that the optical characteristics, such as insertion loss and extinction ratio, are measured in accordance with the conventional method in the atmosphere at the measurement conditions of 25±10°C at the wavelength of 800 nm. Note that the lower limit of the insertion loss is not particularly limited, but, for example, can be 0.01 dB or more. In addition, the upper limit of the extinction ratio is not particularly limited, but, for example, can be 50 dB or less.

Moreover, it is preferable that the Faraday rotator of the present invention has an overall light transmittance (overall transmittance of light) of 78% or more when the wavelength is 800 nm, the sample length L cm is within a range of $0.8 \leq L \leq 1.1$, and it is more preferable that the transmittance is 80% or more. While the higher overall transmittance is preferable, the upper limit thereof is not particularly limited and is 100% or less.

Meanwhile, such an overall light transmittance is measured using UV-Visible spectrophotometers V-670 manufactured by JASCO Corporation. By reflecting light in multiple ways in an integrating sphere whose inner wall is coated with a high reflectance material, such that light is made uniform, and measuring an intensity of light collected by trapping even light scattered by the turbidity of the specimen, and computing according to the formula below. The wavelength at this time is 800 nm.

$$\text{Overall light transmittance} = I / Io \times 100$$

Here, I in the equation above is an intensity of transmitted light (the intensity of light that transmits a sample having a thickness of L cm), and Io represents an intensity of an input light. Note that when the obtained oxide has a nonuniform transmittance and the transmittance varies depending on measurement locations, the transmittance of this oxide is defined by an average transmittance from any ten measurement points.

Next, the hollow magnet 7 employed for the inventive optical isolator will be described. It is preferable that the hollow magnet 7 is a permanent magnet having a size as small as possible, and in order to obtain a large magnetic field strength, a neodymium-iron-boron (NdFeB) based magnet is used.

In general, in order to provide further magnetic flux density, as shown in FIG. 2, a compensating magnet configuration using a plurality of magnets provided with a second hollow magnet 8 and a third hollow magnet 9 is required.

In this configuration, a carbon-steel yoke configuration surrounding the magnets is required, resulting in a larger profile.

Consequently, in order to miniaturize the optical isolator, it is preferable to employ only one hollow magnet. In the hollow magnet 7 according to the present invention, as shown in FIG. 1, it is preferable that a magnetic polarity of the hollow magnet 7 is aligned in an optical axis 6 direction, and an outer periphery of the hollow magnet 7 is provided with polarizer members, and arranged with a metal holder 5 made of SUS material that each can be welded and fixed. By having such a configuration, a compact magnet shape can be achieved while maximizing the magnetic flux density applied to the Faraday rotator 2.

In the inventive optical isolator, it is important to reduce the outer diameter and the length of the hollow magnet 7 in the base design for miniaturization, and thus, it is important to employ the Faraday rotator 2 having a large Faraday effect and the hollow magnet 7 member (magnet) having a large magnetic flux density in a combination to realize further miniaturization.

Moreover, photodamage to the Faraday rotator 2 caused by high-power light, which is a problem when a semiconductor laser is employed for the optical isolator, is determined by the transmittance of the Faraday rotator 2 and the length L thereof. Consequently, to reduce the photodamage, it is advantageous for the Faraday rotator 2 to have a higher transmittance and a shorter length L.

Furthermore, it is preferable in the inventive optical isolator that two or more polarization-dependent glass polarizers are arranged on the optical axis, for by virtue of this configuration, it is possible to obtain a polarization-dependent optical isolator.

Note that, although it is more preferable that two or more planar birefringent crystals and one or more 45-degree optical rotators are provided on the optical axis 6, it is also possible to configure a polarization-independent isolator by this configuration. In this case, it is preferable that the optical axis of the planar birefringent crystal is about 45 degrees slanted from the optical axis 6, and the thickness thereof is 1.0 cm or more. For example, when a rutile single crystal ($TiO_2$) is used, the planar birefringent crystal is capable of adapting a beam having a diameter of up to $\phi$1.0 mm, which is one-tenth of the thickness, and when an $\alpha$-BBO crystal ($BaB_2O_4$) is used, the planar birefringent crystal is capable of adapting a beam of a diameter of up to $\phi$0.35 mm, which is one-thirtieth of the thickness.

As described above, the embodiment of the present invention has been described.

EXAMPLES

Hereinafter, the present invention will be specifically described with reference to Example and Comparative Example. However, the present invention is not limited thereto.

<Example1>

In Example 1, an optical isolator for use in a wavelength band of 780 to 820 nm, having a configuration shown in FIG. 1, was produced. An absorption-type glass polarizer having a high transparency and a high extinction ratio in the wavelength band of 780 to 820 nm was employed for an input polarizer 1 and an output polarizer 3. An anti-reflection coating having a central wavelength of 800 nm was applied to light transmittance surfaces of the polarizers, and in order to prevent reflected light from returning from the light transmittance surface into a light input path, four bottom corners of the polarizers were adhesively fixed together onto a polarizer holder 4 having a tilt angle of only 5 degrees and then inserted into a metal holder 5.

Moreover, a Faraday rotator 2 was positioned at a center of a hollow portion of a hollow magnet 7, and fixed at a position where magnetic field distribution generated by the hollow magnet 7 was maximized. The input polarizer 1 and the output polarizer 3, which were arranged in sequence along a light input path, had optical axes thereof adjusted so as to achieve maximum isolation characteristics in concert with a polarization rotation angle of 45 degrees rotated after transmitting through the Faraday rotator 2. The outer peripheral joint between the polarizer holder 4 and the metal holder 5 was then fixed by laser welding. Note that an anti-reflection coating (not shown) having a center wavelength of 800 nm was applied on the light transmittance surface of the Faraday rotator 2.

As a material for such a Faraday rotator 2, referring to Table 1, a terbium/scandium oxide having a Verdet constant of 0.85 min/(Oe·cm) or more at a wavelength of 800 nm was employed. Moreover, a sample length L of this Faraday rotator 2 was set to 1.1 cm. Then, around an outer periphery of this Faraday rotator 2, the hollow magnet 7 made of a neodymium-iron-boron (NdFeB) based magnet was arranged, and an SUS metal casing was arranged outside of the hollow magnet 7.

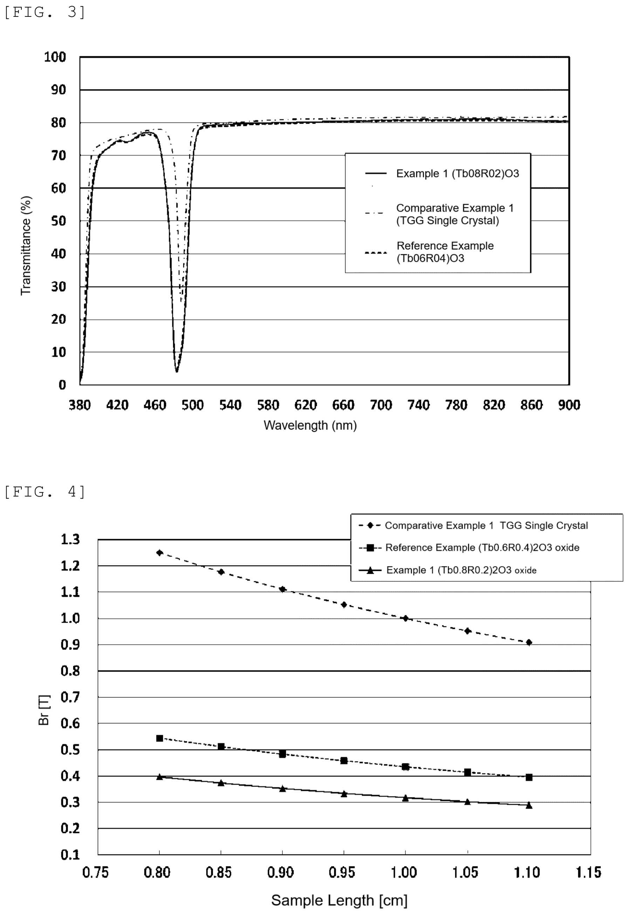

To further describe details of the Faraday rotator 2 in Example 1, a ceramic composed of the terbium/scandium oxide containing terbium oxide at a molar ratio of 80% was used as a specific material for the Faraday rotator 2. When optical characteristics of this ceramic were measured at a wavelength of 800 nm, an insertion loss was 0.1 dB, an extinction ratio was 38 dB, and a Verdet constant was 0.85 min/(Oe·cm). Note that a shape of a sample measured at this time was cylindrical, having an outer diameter of $\phi$2.3 cm, and a length of 1.10 cm. FIG. 3 shows wavelength transmittance characteristics of this Faraday rotator 2.

FIG. 4 shows a relation between the magnetic flux density Br (T = $10^4$ Oe) and the sample length L (cm) to achieve a Faraday rotation angle of 45 degrees, when the sample length of the ceramic composed of the terbium/scandium oxide used in Example 1 was changed stepwise in 0.05 cm increments in a range of 0.80 to 1.10 cm. Note that FIGs. 3 and 4 show materials disclosed in Patent Document 1 as reference examples.

Then, in the case of the Faraday rotator 2 in Example 1, the sample length L was 1.10 cm, and the Verdet constant of the Faraday rotator 2 was 0.85 min/(Oe·cm). Consequently, when the magnetic flux density was required to achieve a Faraday rotation angle of 45 degrees in this case, as calculated from a relation in FIG. 4, it was found that such a magnetic flux density was approximately 2900 [Oe] (i.e., 0.29 [T]).

Moreover, in the present invention, the lower limit of the Verdet constant was 0.80 min/(Oe·cm), the material used for the Faraday rotator 2 in this case was the terbium/scandium oxide, a terbium/yttrium oxide, or a terbium/lutetium oxide, each containing terbium oxide at a molar ratio of at least 80%. In addition, since the lower limit of the sample length L was 0.8 cm, the magnetic flux density of this oxide, calculated from the relation in FIG. 4, indicated that a value of $0.4 \times 10^4$ [Oe] (i.e., 0.4 [T]) was the upper limit of Br. Consequently, for the purpose of furthering the miniaturization of the optical isolator, it is preferable that the hollow magnet used in the present invention has a magnetic flux density B (Oe) that satisfies the following inequality (2).

$$B \leq 0.4 \times 10^4 \quad (2)$$

Note that the lower limit of the magnetic flux density B (Oe) is not particularly limited, but, for example, can be 2000 or more.

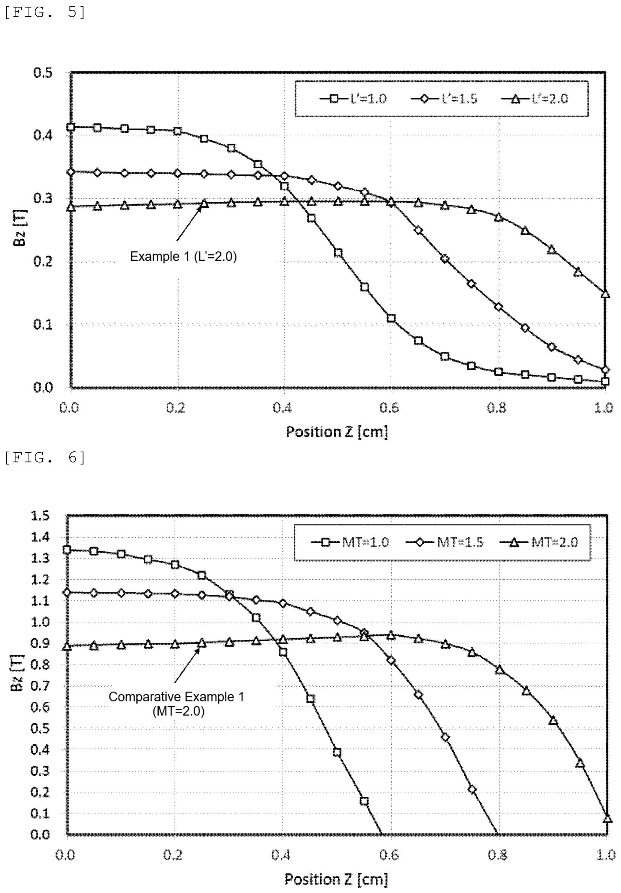

Next, the shape of the hollow magnet that satisfies the magnetic flux density in Example 1 will be described. The shape of the hollow magnet was obtained through magnetic field analysis as described below. That is, a finite element method (JMAG-Designer) was selected as a magnetic field analysis method. As the magnet material, a neodymium-iron-boron (NdFeB) magnet manufactured by Shin-Etsu Chemical Co., Ltd., was selected, and as a material for the metal holder 5, a SUS stainless steel material was selected, respectively. Moreover, FIG. 5 shows a result of a simulation of the magnetic flux density distribution obtained by defining the length (L') of the hollow magnet as a parameter, while setting an outer diameter of the hollow magnet to $\phi$1.2 cm.

According to the result shown in FIG. 5, it was found that the shape of the hollow magnet, which provided the magnetic flux density distribution when the sample length L in Example 1 was 1.10 cm, had an inner diameter of $\phi$0.3 cm, an outer diameter of $\phi$1.2 cm, and a length of 2.0 cm. In the figure, Z [cm] denotes a distance from the center on an optical axis 6, and the sample length L [cm] is calculated as L = 2 × Z. Thus, in FIG. 5, the sample length L is 1.10 cm when a position on a Z coordinate is 0.55 cm.

Furthermore, when the optical isolator optimized for a wavelength of 800 nm was assembled, the optical isolator exhibiting the optical characteristics of an insertion loss of 0.5 [dB] and an isolation of 38 [dB] was successfully produced.

<Comparative Example 1>

In Comparative Example 1, an optical isolator was produced using a TGG single crystal (Verdet constant was 0.27 min/(Oe·cm)) as a Faraday rotator. Then, when a magnetic flux density to be applied to this TGG single crystal was calculated in a range of sample length from 0.80 to 1.10 cm, this result is shown in FIG. 4. In particular, it was found that the magnetic flux density required was approximately 9,100 [Oe] (i.e., 0.91 [T]) when the sample length in Comparative Example 1 was 1.1 cm, which was the same length as in Example 1. Accordingly, in order to calculate a shape of a hollow magnet in the same way as in Example 1, an outer diameter thereof was set to $\phi$2.5 cm, and a length (MT) of a hollow magnet 7 shown in FIG. 2 was used as a parameter, and then an obtained result of a simulation of a magnetic flux density distribution is shown in FIG. 6.

According to the result in FIG. 6, the hollow magnet shape that satisfied the magnetic flux density in Comparative Example 1 had a compensating magnetic field configuration provided with a hollow magnet 7, a second hollow magnet 8, and a third hollow magnet 9. Thus, this assembly was found to have an inner diameter of $\phi$0.3 cm, an outer diameter of $\phi$2.5 cm, and a total length of 6.5 cm, including a length of the hollow magnet 7 being MT = 2.0 cm. Here, Z [cm] in the figure denotes a distance from the center on an optical axis 6, and a sample length L [cm] is calculated as L = 2 × Z.

When Example 1 and Comparative Example 1 are compared regarding the results above, the optical isolator in Example 1 was confirmed to achieve miniaturization in volume ratio by 90% or more, which was calculated from the respective outer diameter and length of the magnet compared to the optical isolator using TGG in Comparative Example 1.

Moreover, since the Verdet constant exhibits wavelength dependency, it is commonly known that the constant decreases at longer wavelengths. Even when the Verdet constants were evaluated at a wavelength of 820 nm, which is the upper limit in a wavelength band of 780 to 820 nm, TGG in Comparative Example 1 exhibited the Verdet constant of 0.26 min/(Oe·cm), while the material in Example 1 exhibited the Verdet constant of 0.80 min/(Oe·cm), and this confirmed that Example 1 demonstrated three times more performance even when a long wavelength of 800 nm was employed.

Accordingly, according to the optical isolator in this Example, it is confirmed that the optical isolator can be applied for practical use, while exhibiting characteristics of low loss and high isolation, and sufficiently miniaturized in the 780 to 820 nm band range.

The present description includes the following embodiments.

[1]: An optical isolator for use in a wavelength band of 780 to 820 nm comprising a Faraday rotator made of a composite oxide containing an oxide represented by the following formula (A) as a main component and having a Verdet constant at a wavelength of 800 nm of 0.80 min/(Oe·cm) or more, and a hollow magnet arranged around an outer periphery of the Faraday rotator,

wherein a sample length L (cm) of the Faraday rotator is in a range represented by the following inequality (1), and a magnetic flux density B (Oe) applied to the Faraday rotator is in a range represented by the following inequality (2)

$$(Tb_xR_{1-x})_2O_3 \qquad (A)$$

wherein "x" satisfies $0.8 \leq x \leq 1.0$, and R comprises at least one element selected from the group consisting of scandium, yttrium, and lanthanoid elements other than Tb (terbium)

$$0.8 \leq L \leq 1.1 \quad (1)$$

$$B \leq 0.4 \times 10^4 \quad (2).$$

[2]: The optical isolator according to the above [1], wherein the oxide is a ceramic.

[3]: The optical isolator according to the above [1] or [2], wherein the Faraday rotator has, at the sample length L (cm), an insertion loss of 1 dB or less and an extinction ratio of 30 dB or higher.

[4]: The optical isolator according to any one of the above [1] to [3], wherein the hollow magnet is made of a neodymium-iron-boron (NdFeB)-based magnet.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

**Claims**

1. An optical isolator for use in a wavelength band of 780 to 820 nm comprising a Faraday rotator made of a composite oxide containing an oxide represented by the following formula (A) as a main component and having a Verdet constant at a wavelength of 800 nm of 0.80 min/(Oe·cm) or more, and a hollow magnet arranged around an outer periphery of the Faraday rotator,

wherein a sample length L (cm) of the Faraday rotator is in a range represented by the following inequality (1), and a magnetic flux density B (Oe) applied to the Faraday rotator is in a range represented by the following inequality (2)

$$(Tb_xR_{1-x})_2O_3 \qquad (A)$$

wherein "x" satisfies $0.8 \leq x \leq 1.0$, and R comprises at least one element selected from the group consisting of scandium, yttrium, and lanthanoid elements other than Tb (terbium)

$$0.8 \leq L \leq 1.1 \quad (1)$$

$$B \leq 0.4 \times 10^4 \quad (2).$$

2. The optical isolator according to claim 1, wherein
the oxide is a ceramic.

3. The optical isolator according to claim 1, wherein
the Faraday rotator has, at the sample length L (cm), an insertion loss of 1 dB or less and an extinction ratio of 30 dB or higher.

4. The optical isolator according to any one of claims 1 to 3, wherein
the hollow magnet is made of a neodymium-iron-boron (NdFeB)-based magnet.

[FIG. 1]

[FIG. 2]

[FIG. 3]

[FIG. 4]

[FIG. 5]

[FIG. 6]

## INTERNATIONAL SEARCH REPORT

| International application No. |
| --- |
| **PCT/JP2024/013700** |

### A. CLASSIFICATION OF SUBJECT MATTER

*G02B 27/28*(2006.01)i; *G02F 1/09*(2006.01)i
FI:   G02B27/28 A; G02F1/09 501

According to International Patent Classification (IPC) or to both national classification and IPC

### B. FIELDS SEARCHED

Minimum documentation searched (classification system followed by classification symbols)

G02B27/28: G02F1/09

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-18145 A (SHIN ETSU CHEM. CO., LTD.) 29 January 2015 (2015-01-29) entire text, all drawings | 1-4 |
| A | JP 2016-109743 A (SHIN ETSU CHEM. CO., LTD.) 20 June 2016 (2016-06-20) entire text, all drawings | 1-4 |
| A | CN 103364972 A (SHIN ETSU CHEM. CO., LTD.) 23 October 2013 (2013-10-23) entire text, all drawings | 1-4 |
| A | JP 2022-170038 A (SHIN ETSU CHEM. CO., LTD.) 10 November 2022 (2022-11-10) entire text, all drawings | 1-4 |

☐ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **31 May 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
**Information on patent family members**

International application No.

**PCT/JP2024/013700**

| Patent document cited in search report | | | Publication date (day/month/year) | Patent family member(s) | | | Publication date (day/month/year) |
|---|---|---|---|---|---|---|---|
| JP | 2015-18145 | A | 29 January 2015 | US<br>entire text, all drawings<br>EP<br>CA<br>CN | 2015/0015947<br><br>2824505<br>2855784<br>104280901 | A1<br><br>A1<br>A1<br>A | |
| JP | 2016-109743 | A | 20 June 2016 | (Family: none) | | | |
| CN | 103364972 | A | 23 October 2013 | (Family: none) | | | |
| JP | 2022-170038 | A | 10 November 2022 | US<br>entire text, all drawings<br>EP<br>CA<br>WO | 2024/0118564<br><br>4332663<br>3216513<br>2022/230528 | A1<br><br>A1<br>A1<br>A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015018145 A

**Non-patent literature cited in the description**

- **AKIO IKESUE**. Single Crystal to Polycrystalline Materials with Optical Grade. *Applied Physics*, 2006, vol. 75 (5), 579-583

- **TAKAMASA YANAGITANI** ; **HIDEKI YAGI**. Current State and Future of Ceramic Laser Material. *The Review of Laser Engineering*, 2008, vol. 36 (9), 544-548